# EUROPÄISCHE PATENTSCHRIFT

(11) **EP 3 615 984 B1**
(45) Veröffentlichungstag und Bekanntmachung des Hinweises auf die Patenterteilung: **22.02.2023**
(21) Anmeldenummer: 18722927.3
(22) Anmeldetag: 23.04.2018
(51) Int. Cl.: G02B 27/01

(54) **HEAD-UP-DISPLAY**
HEAD-UP DISPLAY
AFFICHAGE TÊTE HAUTE

(30) Priorität: 24.04.2017 DE 102017206805
(43) Veröffentlichungstag der Anmeldung: 04.03.2020
(73) Patentinhaber: Continental Automotive Technologies GmbH, 30165 Hannover (DE)
(72) Erfinder: HABERMEHL, Kai, 64295 Darmstadt (DE)
(74) Vertreter: Continental Corporation
(86) Internationale Anmeldenummer: PCT/EP2018/060297
(87) Internationale Veröffentlichungsnummer: WO 2018/197391

(56) Entgegenhaltungen:
- DE-A1-102011 105 689
- US-A- 4 886 328

## Beschreibung

Die vorliegende Erfindung betrifft ein Head-Up-Display, bei dem eine Anzeigeeinheit vor Schädigung durch von außen einfallendes Licht geschützt ist sowie ein Verfahren zu dessen Betrieb.

Ein Head-Up Display erzeugt in der Windschutzscheibe ein für den Fahrer sichtbares virtuelles Bild. Dieses Bild wird in der Regel auf einer Anzeigeeinheit, beispielsweise einer Flüssigkristallanzeige (LCD, Liquid Crystal Display) erzeugt und mittels Spiegeln durch ein Loch im Armaturenbrett an die Windschutzscheibe reflektiert. Oft werden Head-Up Displays durch aufwendige und teure Maßnahmen wie Polarisationsfolien, Kaltlichtspiegel und ähnliches, vor Sonneneinstrahlung geschützt, um vor allem die Anzeigeeinheit vor Überhitzung zu schützen. Als nachteilig ist daran anzusehen, daß die Kosten der Gegenmaßnahmen, insbesondere die Kosten für Polarisationsfolien oder Kaltlichtspiegel, recht hoch sind. Außerdem verzögern diese Maßnahmen die Beschädigung der Anzeigeeinheit nur für eine gewisse Zeit, vermeiden sie aber nicht gänzlich. Ein Nachteil bei der Verwendung von Gegenmaßnahmen die auf Polarisation beruhen, liegt darin, daß unangenehme Nebeneffekte auftreten, wie ein verschwindendes Bild wenn der Fahrer eine polarisierende Sonnenbrille verwendet. Polarisationsfolien, die auf dem Head-Up-Display angebracht sind, schimmern und werden daher oft als irritierend angesehen.

Die EP 2 843 652 A1 zeigt ein Head-Up-Display mit einem Anzeigeelement, dessen Bild mittels eines optischen Pfades in einem kritischen Winkel auf eine Spiegeleinheit eines Fahrzeugs geworfen, und von dort einem Umgebungsbild überlagert in Richtung Fahrer reflektiert wird. Dessen Anzeigeelement wird vor Schädigung durch direkt einfallendes Sonnenlicht geschützt, indem ein lichtempfindlicher Sensor das einfallende Sonnenlicht detektiert, und bei zu hoher Intensität die Leuchtstärke einer Beleuchtungseinheit für das Anzeigeelement reduziert oder die Beleuchtungseinheit ganz abschaltet. Dadurch wird die gesamte auf das Anzeigeelement einfallende Lichtmenge reduziert, was dessen Lebensdauer erhöht. Allerdings wird die Intensität des einfallenden Sonnenlichts nicht begrenzt, wodurch eine Schädigung des Anzeigeelements nur zeitlich hinausgeschoben, nicht aber unterbunden wird.

Aus der US 2016/0306169 A1 ist ein Head-Up-Display bekannt, bei dem der Anstieg der Temperatur eines Anzeigeelements begrenzt wird. Dazu wird eine Abschätzung vorgenommen, ob der aktuelle Sonnenstand so ist, daß die Gefahr besteht, daß zu viel Sonnenlicht auf das Anzeigeelement fällt, dessen Temperatur dabei zu stark erhöht, und dieses dadurch geschädigt wird. In diesem Fall wird das auf das Anzeigeelement fallende Licht reduziert indem ein Filter in den optischen Pfad eingebracht wird. Als nachteilig daran ist anzusehen, daß die Abschätzung falsch sein kann, insbesondere wenn sie auf einer falsch bestimmten geographischen Position des Fahrzeugs beruht, einer falschen Tageszeit, oder wenn aufgrund der Witterung ohnehin kaum direktes Sonnenlicht auf das Anzeigeelement fällt. In diesem Fall reduziert der optische Filter auch die Lichtmenge des in Richtung Fahrer geleiteten Bildes des Head-Up-Displays, sodaß dieser grundlos auf ein optimal helles Bild der Anzeige verzichten muß.

Weitere Head-Up-Displays gemäß dem Stand der Technik sind aus den Druckschriften US4886328 und DE102011105689 bekannt.

Wünschenswert ist ein zuverlässiger Schutz des Anzeigeelements eines Head-Up-Displays vor Schädigung durch Umgebungslicht, ohne den Betrieb des Head-Up-Displays unnötig einzuschränken. Wünschenswert ist weiterhin, dies möglichst kostengünstig zu erreichen.

Erfindungsgemäß ist bei einem Head-Up-Display gemäß Oberbegriff des Anspruchs 1 vorgesehen, daß der Sensor Umgebungslicht detektiert, welches in einem kritischen Winkel von der Spiegeleinheit kommend in den optischen Pfad eintritt. Ein erfindungsgemäßes Head-Up-Display weist eine Steuerungseinheit auf, an deren Eingang das Signal des Sensors anliegt, und deren Steuerungsausgang mit einer Parkeinrichtung für das Head-Up-Display verbunden ist. Im Fall eines starken Lichteinfalls im kritischen Winkel wird dieser vom Sensor detektiert, woraufhin die Parkeinheit, von der Steuerungseinheit angesteuert, das Head-Up-Display in eine Parkposition fährt, in der das im kritischen Winkel einfallende Licht nicht auf das Anzeigeelement fällt. Als Anzeigeelement ist hier sowohl ein Flüssigkristallelement, auch LC-Display oder LCD genannt, vorgesehen, ein OLED-Element, welches organische Leuchtdioden aufweist, oder ein anderes Anzeigeelement, welches empfindlich auf bestimmte Frequenzen des einfallenden Lichts reagiert oder allgemein vor Überhitzung durch einfallendes Licht zu schützen ist. Als Spiegeleinheit wird im allgemeinen die Windschutzscheibe verwendet, oder ein sogenannter Combiner, ein teildurchlässiger Spiegel, der zwischen Fahrer und Windschutzscheibe angeordnet ist. Das Fahrzeug kann sowohl als Land-, als Wasserals auch als Luftfahrzeug vorgesehen sein. Der Fahrer, in dessen Richtung das dem Umgebungsbild überlagerte Bild des Anzeigeelements geleitet wird, ist vorzugsweise der Lenker des Fahrzeugs. Das überlagerte Bild kann hier aber auch zusätzlich oder alternativ für den Beifahrer oder einen anderen Mitfahrer des Fahrzeugs vorgesehen sein. Der Sensor ist ein winkelabhängiger Sensor, der Umgebungslicht detektiert welches im kritischen Winkel von der Spiegeleinheit kommend in den optischen Pfad eintritt. Umgebungslicht, welches in diesem Winkel und einem um diesen herumliegenden Winkelbereich einfällt, gelangt in der Betriebsposition des Head-Up-Displays vollständig oder zu großen Teilen auf das Anzeigeelement und führt dabei bei längerer Einwirkung oder auch bei kurzfristig sehr hoher Intensität zu dessen Schädigung. Das Head-Up-Display wird daher bei in diesem kritischen Winkelbereich einfallenden Umgebungslicht in eine Parkposition versetzt. Schädigendes Umgebungslicht ist im allgemeinen direkt einfallendes Sonnenlicht, es kann aber auch von anderen starken Lichtquellen herrühren, die das Anzeigeelement zu stark erhitzen oder auf andere Art und Weise schädigen. Dies sind beispielsweise starke künstliche Lichtquellen der Straßenbeleuchtung, die bei Langsamfahrt oder Stillstand des Fahrzeugs für längere Zeit im kritischen Winkel einfallen. Die Parkposition des Head-Up-Displays wird durch Schließen eines Deckels des Head-Up-Displays erreicht, wodurch der Strahlengang unterbrochen wird. Auch andere Mittel, die zum Unterbrechen des Strahlengangs geeignet sind, finden erfindungsgemäß Verwendung. So unterbricht auch ein Verkippen der Spiegeleinheit oder eines anderen im Strahlengang befindlichen Spiegels den Strahlengang und verhindert, daß im kritischen Winkelbereich einfallendes Licht auf das Anzeigeelement gelangt.

Ein erfindungsgemäßes Head-Up-Display gemäß Anspruch 1 weist einen Lichttunnel auf, der entsprechend dem kritischen Winkel ausgerichtet ist, und an dessen Ende der Sensor angeordnet ist. Dies stellt sicher, daß nur solches Licht vom Sensor registriert wird, welches im kritischen Winkel bzw. im kritischen Winkelbereich einfällt. Der Sensor selbst braucht daher keine spezielle winkelabhängige Ausgestaltung aufzuweisen, er ist somit einfach im Aufbau und kostengünstig. Der Lichttunnel wird kostengünstig in das Gehäuse des Head-Up-Displays oder ein anderes Bauteil des Head-Up-Displays integriert, beispielsweise in ein im Spritzgießverfahren hergestelltes Kunststoffbauteil.

Gemäß einer vorteilhaften Ausgestaltung weist der Lichttunnel eine oder mehrere absorbierende Wandflächen auf seiner Innenseite auf. Dies bewirkt, daß nur Licht, das im kritischen Winkel einfällt, den Tunnel geradlinig passiert, während außerhalb des kritischen Winkelbereichs einfallendes Licht von den Wandflächen absorbiert und somit nicht vom Sensor detektiert wird.

Eine oder mehrere kegelförmig geneigte Wandflächen ermöglichen eine Erweiterung des kritischen Winkels auf einen kritischen Winkelbereich, beispielsweise auf +/-5° Abweichung vom kritischen Winkel, in dem ebenfalls in zu hoher Intensität einfallendes Umgebungslicht zu einer Schädigung des Anzeigeelements führt. Der Lichttunnel ist dazu beispielsweise als Rundkegel, also mit einer einzigen kegelförmig geneigten Wandfläche ausgestaltet. Mehrere kegelförmig geneigte Wandflächen bilden die Oberfläche eines Kegels mit nichtrundem Querschnitt, beispielsweise einem viereckigen oder sechseckigen Querschnitt, oder auch einen unregelmäßig geformten Querschnitt. Derartige von einem Rundkegel abweichende Formen sind geeignet, um den vom Sensor detektierten kritischen Winkelbereich an die geometrische Form des Anzeigeelements anzupassen.

Eine oder mehrere zwischen den Wandflächen des Lichttunnels angeordnete Trennflächen, die im wesentlichen parallel zu den Wandflächen ausgerichtet sind, führen ebenfalls dazu, daß nur Licht aus dem kritischen Winkel bzw. kritischen Winkelbereich auf das Sensorelement fällt, selbst wenn der Querschnitt des Lichttunnels relativ groß gewählt ist oder seine Länge im Vergleich zum Querschnitt relativ kurz ist. Durch die Wandflächen werden in diesem Fall viele kleine Lichttunnel gebildet, die ebenfalls trotz eines ungünstigen Verhältnisses zwischen Länge und Querschnitt des Lichttunnels eine hohe Winkelselektivität gewährleisten. Im allgemeinen werden mehrere Trennflächen verwendet, bei großer Länge und vergleichsweise kleinem Querschnitt des Lichttunnels kann aber auch schon eine Trennfläche zur Erzielung der gewünschten Winkelselektivität ausreichend sein. Weist der Lichttunnel kegelförmig geneigte Wandflächen auf, so sind die Trennflächen vorzugsweise auf denselben Fluchtpunkt wie die Wandflächen des Trichters ausgerichtet.

Erfindungsgemäß ist vorgesehen daß der Lichttunnel an einem Gehäuse des Head-Up-Displays in der Nähe der Lichtausgangsöffnung des Strahlengangs angeordnet ist. Dies hat den Vorteil, daß der kritische Winkel hier noch einfach feststellbar ist, und noch keine Beeinflussung durch im Inneren des Head-Up-Displays angeordnete Elemente auftritt, die eine Ausrichtung des Lichttunnels im korrekten Winkel erschwert. Der Lichttunnel ist vorzugsweise einstückig mit dem Gehäuse ausgebildet, beispielsweise als Kunststoffteil, welches gleichzeitig mit dem Gehäuse im Spritzgußverfahren hergestellt wird, oder als separates Bauteil, welches in das Gehäuse bei dessen Herstellung eingespritzt oder in eine Gehäuseöffnung eingesetzt wird.

Erfindungsgemäß ist vorgesehen, daß die Steuerungseinheit eine Verzögerungseinheit und alternativ dazu oder zusätzlich eine Integrationseinheit aufweist. Die Verzögerungseinheit führt dazu, daß eine nur kurzzeitige Überschreitung eines Schwellwerts der Intensität des im kritischen Winkel einfallenden Lichts nicht dazu führt, daß die Parkposition eingenommen wird. Dies hat den Vorteil, daß beispielsweise bei kurzzeitigem Überfahren einer Bodenwelle, dem schnellen Durchfahren einer Kurve, bei Reflexion des Sonnenlichts an einem außerhalb des Fahrzeugs befindlichen spiegelnden Element, beispielsweise den Glasflächen eines Hauses, an dem das Fahrzeug vorbeifährt, keine Unterbrechung des für den Fahrer sichtbaren Bildes der Anzeige des Anzeigeelements auftritt. Bei derartig kurzzeitig auftretenden hohen Lichtintensitäten tritt nur eine geringe Erwärmung des Anzeigeelements auf, die nur zu einer geringfügigen bzw. zu keiner Schädigung des Anzeigeelements führt. Anstatt oder zusätzlich zur Verzögerungseinheit ist eine Integrationseinheit vorgesehen, die die Intensität des Lichteinfalls über einen gewissen Zeitraum integriert, und dazu führt, daß die Parkposition nur dann eingenommen wird, wenn eine gewisse Gesamtenergie innerhalb eines gewissen kritischen Zeitraums eingefallen ist. Sie gibt die Parkposition wieder frei, wenn die Gesamtenergie wieder die innerhalb einer kritischen Zeitspanne eingefallene Gesamtenergie wieder unter einen kritischen Wert gefallen ist. Dies ist zum Beispiel dann sinnvoll, wenn eine Baumallee durchfahren wird, bei der aufgrund der Lücken zwischen den Blättern nur jeweils kurzfristig eine hohe Lichtintensität auf den Sensor fällt, die über eine größeren Zeitraum aber dennoch zu einer kritischen Erwärmung oder anderweitig hervorgerufenen Schädigung des Anzeigeelements führt.

Erfindungsgemäß ist vorgesehen, daß der Lichttunnel eine Länge aufweist, die ein mehrfaches seines Durchmessers beträgt. Ein solcher Lichttunnel mit im Vergleich zu seinem Querschnitt großer Länge hat den Vorteil einer guten Winkelselektivität.

Gemäß der Erfindung weist das Head-Up-Display mehrere Trennwände auf, die eine Vielzahl von kleinen Lichttunneln mit im Vergleich zu ihrer Länge kleinem Querschnitt bilden. Dies kombiniert vorteilhaft gute Winkelselektivität mit kurzer Baulänge.

Erfindungsgemäß sind eine kegelförmige Wandfläche und geneigte Trennflächen vorgesehen, die alle auf denselben Fluchtpunkt ausgerichtet sind. Im oder nahe dem Fluchtpunkt befindet sich ein Sensor. Dies hat den Vorteil, daß Licht aus einem durch die Kegelform bedingten Winkelbereich berücksichtigt wird.

Vorteilhafterweise ist der Lichttunnel ein in ein Gehäuse des Head-Up-Displays eingespritztes Bauteil. Dieses wird mit geeigneter Genauigkeit vorgefertigt. Beim Einspritzen in das Gehäuse reichen dann geringere Genauigkeitsanforderungen aus.

Weist der Lichttunnel einen quadratischen Querschnitt auf, so hat dies den Vorteil, einer unkomplizierten Herstellung auf. Weist er einen rechteckigen Querschnitt auf, so hat dies den zusätzlichen Vorteil, daß der Lichttunnel an die oftmals verwendete längliche Form des Anzeigeelements angepaßt ist.

Erfindungsgemäß ist der Lichttunnel durch eine Ausnehmung in einer Außenwand des Head-Up-Displays gebildet. Dies hat den Vorteil einer leichten Anpaßbarkeit an bereits bestehende Produktdesigns, die nur leicht abgeändert zu werden brauchen um die erfindungsgemäße Lösung zu implementieren.

Gemäß einer weiteren Ausbildungsform der Erfindung weist der Lichttunnel kegelförmig geneigte Wandflächen auf, die einen Kegelstumpf mit quadratischem Querschnitt bilden.

Ein Verfahren zum Betreiben eines Head-Up-Displays weist folgende Schritte auf: Umgebungslicht, das in einem kritischen Winkelbereich in das Head-Up-Display einfällt, wird detektiert. Überschreitet die Intensität des im kritischen Winkelbereich einfallenden Lichts einen ersten Grenzwert, so wird das Head-Up-Display aus einer Betriebsposition in eine Parkposition versetzt. Unterschreitet die Intensität des im kritischen Winkelbereich einfallenden Lichts einen zweiten Grenzwert, so wird das Head-Up-Display aus der Parkposition wieder in eine Betriebsposition versetzt. Das Überschreiten des ersten Grenzwerts liegt dann vor, wenn das Sensorsignal einen gewissen Wert überschreitet, unabhängig davon wie lange dieser gewisse Wert überschritten wird. Alternativ liegt eine Überschreitung des Grenzwerts dann vor, wenn das Sensorsignal für mehr als eine bestimmte Zeit einen gewissen Wert überschreitet. Alternativ ist vorgesehen, das Sensorsignal über ein Zeitfenster zu integrieren und die Parkposition dann einzunehmen, wenn das integrierte Signal einen bestimmten Wert überschreitet. Der zweite Grenzwert ist vorzugsweise niedriger als der erste Grenzwert.

Weitere vorteilhafte Ausgestaltungen der Erfindung sind auch in der nachfolgenden Beschreibung von Ausführungsbeispielen anhand von Figuren angegeben. Sinnvolle Kombinationen und Weiterbildungen, die im Können des Fachmanns liegen, liegen ebenfalls im Bereich der Erfindung.

Es zeigen:
- Fig.1: Head-Up-Display
- Fig.2: Lichttunnel
- Fig.3: Lichttunnel mit Trennwand
- Fig.4: Lichttunnel mit Trendwänden
- Fig.5: Lichttunnel mit kegelförmiger Wandfläche
- Fig.6: Lichttunnel mit kegelförmigen Wandflächen
- Fig.7: Flußdiagramm eines Verfahrens

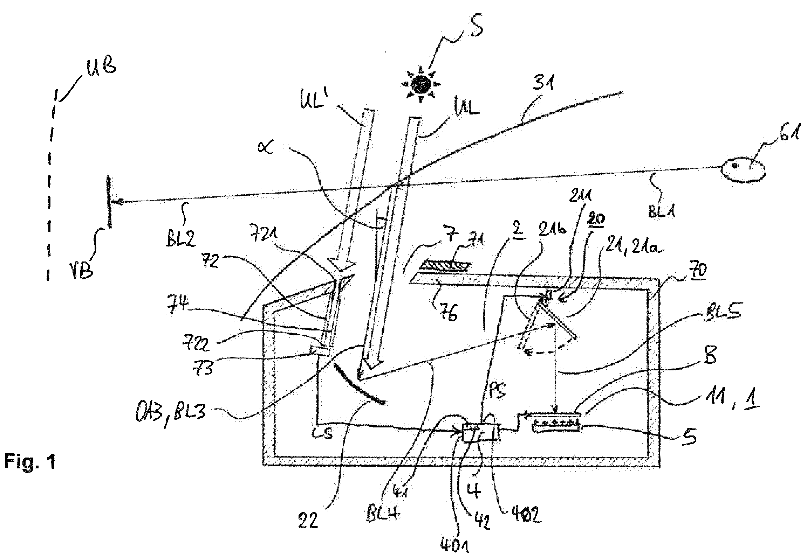

Fig.1 zeigt ein erfindungsgemäßes Head-Up-Display. Auf einem Anzeigeelement 11 einer Anzeigeeinheit 1 wird ein darzustellendes Bild B angezeigt. Das Anzeigeelement 11 ist hier ein Flüssigkristall-Anzeigeelement, welches von einer Lichtquelle 5 hinterleuchtet wird und von einer Steuerungseinheit 4 ein Signal für das darzustellende Bild B erhält. Das darzustellende Bild B erscheint dem Fahrer als virtuelles Bild VB im Außenraum vor dem Fahrzeug zu schweben. Tatsächlich geht sein Blick BL1 nicht über den Blick BL2 auf das vor dem Fahrzeug dargestellte virtuelle Bild VB, sondern, an der Windschutzscheibe 31 gespiegelt über BL3, BL4 und BL5 auf das Anzeigeelement 11. Der Blick BL verläuft dabei entgegengesetzt zum Strahlengang des vom Anzeigeelement 11 ausgehenden Lichts. Dieses wird, vom Anzeigeelement 11 kommend, an einem verstellbaren Spiegel 21 reflektiert, von diesem auf einen gekrümmten Spiegel 22 geworfen und von diesem auf die Windschutzscheibe 31 reflektiert, von wo sie in das Auge 61 des Fahrers fällt. Da die Windschutzscheibe 31 teilweise reflektieren und teilweise durchlässig ist, wird dabei das Bild B als virtuelles Bild VB dem durch die Windschutzscheibe 31 fallenden Umgebungsbild UB überlagert. Die Krümmung des gekrümmten Spiegels 22 kompensiert die Krümmung der Windschutzscheibe 31, sodaß das Auge 61 des Fahrers ein unverzerrtes Bild B wahrnimmt. Der verstellbare Spiegel 21 und der gekrümmte Spiegel 22 sind Teil einer Ablenkeinheit 2, die den optischen Pfad zwischen Anzeigeelement 11 und Ausgangsöffnung 7 des Head-Up-Displays bildet. Der verstellbare Spiegel 21 wird mittels eines Antriebs 211 verstellt. Beide zusammen bilden die Parkeinrichtung 20.

Die optische Achse OA3 des aus der Ausgangsöffnung 7 austretenden Lichts weist einen kritischen Winkel α zur Senkrechten auf. In einer Ebene senkrecht zur Zeichenebene steht die optische Achse OA3 im allgemeinen senkrecht. Abhängig von der Fahrzeuggeometrie, der Anordnung des Head-Up-Displays und anderen Faktoren, kann hier aber auch ein von 90° verschiedener kritischer Winkel auftreten. Im folgenden wird nur der in der Zeichenebene liegende kritische Winkel α berücksichtigt, ein in einer senkrecht zur Zeichenebene stehenden Ebene liegender kritischer Winkel ist erfindungsgemäß entsprechend zu berücksichtigen. Im folgenden wird der Einfachheit halber vom Winkel α gesprochen obwohl es sich tatsächlich um einen relativ schmalen Winkelbereich sowohl in der Zeichenebene als auch in einer senkrecht zu dieser stehenden Ebene handelt. Dieser Winkelbereich müßte mit αx +/- Δx und αy +/- Δy beschrieben werden, wobei x und y zueinander orthogonale Richtungen beschreiben.

Das von der Sonne S kommende Umgebungslicht UL fällt in der Abbildung im kritischen Winkel α durch die Ausgangsöffnung 7 in die Ablenkeinheit 2. Es gelangt damit auf das Anzeigeelement 11 und schädigt dieses dabei durch Überhitzung oder andere, von starkem Lichteinfall hervorgerufene Beschädigungen. Um dies zu verhindern, wird der verstellbare Spiegel 21 von seiner dargestellten Betriebsposition 21a in eine gestrichelt dargestellte Parkposition 21b verschwenkt. Auch eine Verschwenkung in die andere Richtung, um eine hier nicht dargestellte alternative Parkposition einzunehmen, ist hier sinnvoll möglich. Dies trifft auch auf ein Verschwenken um eine Achse, die nicht wie die hier dargestellte Achse senkrecht zur Zeichenebene steht. Befindet sich der verstellbare Spiegel 21 in seiner Parkposition 21b, so fällt kein Umgebungslicht UL mehr auf das Anzeigeelement 11. Alternativ oder zusätzlich kann auch der gekrümmte Spiegel 22 von seiner hier dargestellten Betriebsposition in eine hier nicht dargestellte Parkposition verschwenkt werden. Auch das Verschließen der Ausgangsöffnung 7 mittels eines Deckels 71, der hier in der Betriebsposition dargestellt ist, versetzt das Head-Up-Display in eine Parkposition. Ein anderes, den Strahlengang unterbrechendes Element, ähnlich dem Deckel 71, kann auch an anderer Stelle innerhalb des Head-Up-Displays angeordnet sein. Das Umgebungslicht UL fällt auch als Umgebungslicht UL' in den Lichttunnel 72 ein, an dessen der Eingangsöffnung 721 entgegengesetztem Ende 722 ein lichtempfindlicher Sensor 73 angeordnet ist. Dessen Ausgangssignal LS wird einem Steuerungseingang 401 der Steuerungseinheit 41 zugeführt. Während der größten Zeit des Betriebs des Head-Up-Displays befindet sich die Sonne S in einer anderen Position als der dargestellten kritischen Position, bei der das Umgebungslicht UL' im kritischen Winkel α einfällt. Steht die Sonne S in einer anderen als der hier dargestellten kritischen Position, so kann das von der Sonne S kommende Umgebungslicht UL' den Lichttunnel 72 nicht passiert, sondern wird meist bereits in dessen oberem Bereich an einer Wandfläche 74 an der Innenseite des Lichttunnels 72 absorbiert. Der Sensor 73 gibt daher im Normalfall nur ein sehr kleines Ausgangssignal LS ab. Befindet sich die Sonne S aber in einer Position, in der das von ihr kommende Umgebungslicht UL' im kritischen Winkel α einfällt, so fällt dieses parallel zum Lichttunnel 72 ein, durchläuft diesen und löst im Sensor 73 ein großes Ausgangssignal LS aus. Dieses wird von der Steuerungseinheit 4 in ein an ihrem Steuerungsausgang 402 abgegebenes Parksignal PS umgesetzt, welches einen Antrieb 211 des verstellbaren Spiegels 21 ansteuert. Dieser verschwenkt daraufhin den verstellbaren Spiegel 21 von der Betriebsposition 21a in seiner Parkposition 21b. Im dargestellten Ausführungsbeispiel weist die Steuerungseinheit 4 sowohl eine Verzögerungseinheit 41 als auch eine Integrationseinheit 42 auf. Die Verzögerungseinheit 41 dient dazu, das Verschwenken des Spiegels 21 verzögert auszulösen, dies vermeidet, daß bereits bei kurzzeitigen Spitzen im Ausgangssignal LS ein Verschwenken stattfindet. Die Integrationseinheit 42 ermittelt die über einen gewissen Zeitraum einfallende Lichtmenge, und löst ein Verschwenken nur dann aus, wenn eine bestimmte Lichtmenge pro Zeiteinheit überschritten beziehungsweise unterschritten wurde.

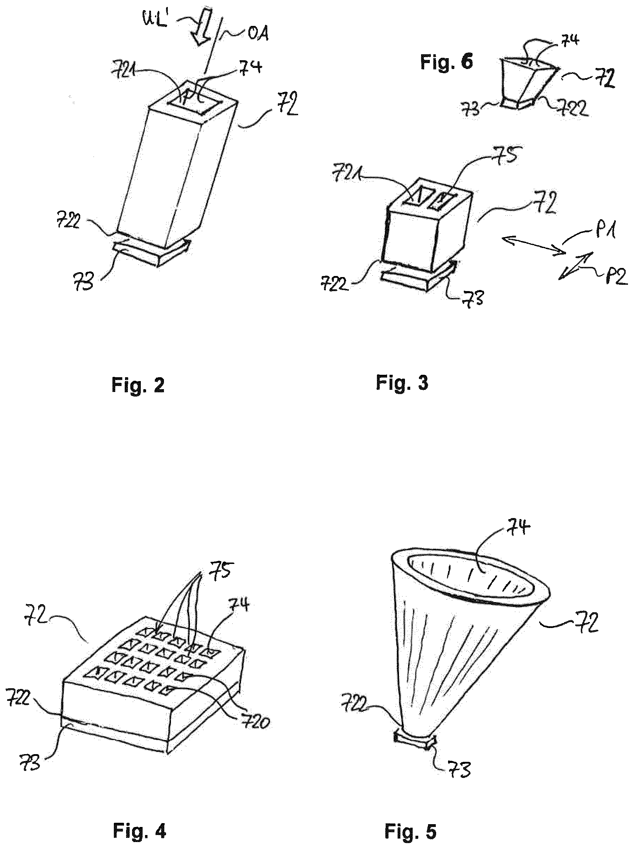

Fig.2 zeigt einen Lichttunnel 72, der nicht unter den erfindungsgemäßen Gegenstand fällt. Er weist einen quadratischen Querschnitt auf, seine innenliegenden vier Wandflächen 74 sind lichtabsorbieren ausgelegt. Am oberen Ende sieht man die Eingangsöffnung 721 des Lichttunnels 72, am unteren Ende 722 ist der lichtempfindliche Sensor 73 angeordnet. In der Abbildung ist er vom unteren Ende 722 beabstandet dargestellt, was dann unkritisch ist, wenn kein oder kaum Licht auf die lichtempfindliche Fläche des Sensors 73 fällt, welches nicht den Lichttunnel 72 durchlaufen hat. Andernfalls wird der Sensor 73 direkt am Lichttunnel 72 angeordnet. Die optische Achse OA ist hier schematisch angedeutet. Man erkennt, daß Umgebungslicht UL' nur dann den Lichttunnel 72 von der Eingangsöffnung 721 bis zu seinem Ende 722 durchlaufen kann, wenn es parallel zur optischen Achse OA oder nur in einem kleinen davon abweichenden Winkelbereich einfällt.

Fig.3 zeigt einen Lichttunnel 72 gemäß eines weiteren Beispiels, der eine Trennwand 75 aufweist. Durch die Trennwand 75 verringert sich der effektive Querschnitt des Lichttunnels 72, wodurch der Winkelbereich, in dem einfallendes Licht den Lichttunnel 72 bis zum Sensor 73 passieren kann, reduziert wird. Dies wird im vorliegenden Ausführungsbeispiel dazu genutzt, die Länge des Lichttunnels 72 von seiner Eingangsöffnung 721 bis zum unteren Ende 722 zu verkürzen. Durch die Verkürzung vergrößert sich der Winkelbereich wieder, was im Endeffekt zu einem vergleichbaren Winkelbereich wie zu dem in Fig.2 dargestellten Lichttunnel 72 führt. Dies trifft für den in einer durch den Doppelpfeil P1 angedeuteten Richtung liegenden Winkelbereich zu. Entsprechend einer durch den Doppelpfeil P2 angedeuteten Richtung vergrößert sich durch die kürzere Länge des Lichttunnels 72 der Winkelbereich unter dem einfallendes Licht bis zum Sensor 73 gelangt. Dies berücksichtigt eine längliche Form des Anzeigeelements 11, bei welchem in Richtung der größeren Ausdehnung auch ein größerer kritischer Winkelbereich vorhanden ist unter dem einfallendes Licht das Anzeigeelement 11 erreichen und somit schädigen kann. In Richtung der kürzeren Ausdehnung des Anzeigeelements 11 ist der entsprechende kritische Winkelbereich kleiner.

Fig.4 zeigt einen Lichttunnel 72 gemäß einer Ausgestaltungsform mit mehreren Trennwänden 75. Diese bilden zusammen mit den Wandflächen 74 eine Vielzahl von kleinen Lichttunneln 720, die einen im Vergleich zu ihrer Länge kleinen Querschnitt aufweisen. Obwohl der Lichttunnel 72 der Fig.4 wesentlich kürzer ist als der zu Fig.2 gezeigte, liegt das Verhältnis von Querschnittsfläche zu Länge bei den kleinen Lichttunneln 720 in etwa gleichauf mit dem des Lichttunnels 72 der Fig.2. Die Lichttunnel zu Fig.2 und zu Fig.4 weisen somit eine vergleichbare Winkelselektivität auf. Der Sensor 73 des in Fig.4 dargestellten Ausführungsbeispiels ist direkt am unteren Ende 722 des Lichttunnels 72 befestigt, ihn erreicht nur das Licht, das die Lichttunnel 720 durchlaufen hat.

Fig.5 zeigt als weiteres Beispiel einen Lichttunnel 72 mit kegelförmiger Wand 74. Der Lichttunnel 72 hat insgesamt die Form eines abgeschnittenen Kegels, an dessen unterem Ende 722 der Lichtsensor 73 angeordnet ist. Die Winkelselektivität wird hier durch den Öffnungswinkel des Kegels erreicht. Befindet sich der Lichttunnel 72 integriert in ein weiteres Bauteil, beispielsweise die Außenwand 76 des Head-Up-Displays, so besteht der Lichttunnel 72 im Idealfall nur aus eine Ausnehmung in der Außenwand 76, die dann die Wandfläche 74 bildet. Dies hat den Vorteil, daß eine derartige Form aufgrund des nach innen hin abnehmenden Querschnitts leicht im Spritzgußverfahren oder einem anderen Verfahren zur Herstellung von Kunststoffteilen hergestellt werden kann.

Fig.6 zeigt als weiteres Beispiel einen Lichttunnel 72 mit kegelförmig geneigten Wandflächen 74, die zusammen einen Kegelstumpf mit quadratischem Querschnitt ergeben. Am unteren Ende 722 des Lichttunnels 72 befindet sich der Sensor 73.

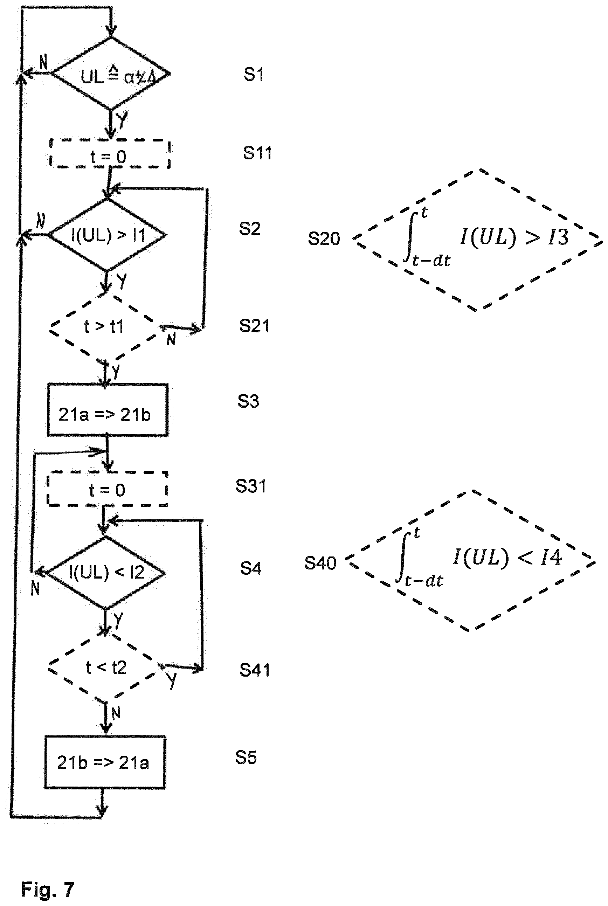

Fig.7 zeigt ein Flußdiagramm eines Verfahrens. Dabei sind alternative Schritte gestrichelt dargestellt. Im Schritt S1 wird überprüft, ob Umgebungslicht UL in einem kritischen Winkelbereich α +/- Δ um den kritischen Winkel α einfällt. Ist dies nicht der Fall, so wird zu Schritt S1 zurückverzweigt. Andernfalls wird in Schritt S2 geprüft, ob die im kritischen Winkelbereich α +/- Δ einfallende Lichtmenge I(UL) einen ersten Grenzwert I1 überschreitet. Ist dies nicht der Fall, so wird zu Schritt S1 zurückverzweigt. Andernfalls wird das Head-Up-Display im Schritt S3 von einer Betriebsposition 21a in eine Parkposition 21b versetzt.

Im Schritt S4 wird geprüft, ob die Lichtmenge I(UL) einen zweiten Grenzwert I2 unterschreitet. Ist dies nicht der Fall, so wird zu Schritt S4 zurückverzweigt. Andernfalls wird im Schritt S5 das Head-Up-Display von der Parkposition 21b zurück in die Betriebsposition 21a versetzt. Anschließend wird zu Schritt S1 verzweigt.

In einer alternativen Variante wird im zusätzlichen Schritt S11, der sich an den Schritt S1 bei positivem Ergebnis anschließt, ein Zähler auf t=0 gesetzt. Übertrifft die Lichtmenge I (UL) den ersten Grenzwert I1, aber die Zeit t noch nicht eine erste Zeit t1, so wird zu Schritt S2 zurückverzweigt, andernfalls zu Schritt S3. Auf diese Weise wird ausgeschlossen, daß die Parkposition 21b auch dann eingenommen wird, wenn die im kritischen Winkelbereich einfallende Lichtmenge I(UL) nur kurzzeitig den ersten Grenzwert I1 überschreitet. Diese Schritte werden beispielsweise in der Verzögerungseinheit 41 realisiert.

In einer alternativen Variante wird im zusätzlichen Schritt S31, der sich an den Schritt S3 anschließt, ein Zähler auf t = 0 gesetzt. Der Schritt S31 wird auch dann durchlaufen, wenn das Ergebnis des Schritts S4 negativ ist. Ist dieses positiv und überschreitet die seit dem Nullsetzen abgelaufene Zeit t eine zweite Zeit t2, so folgt Schritt S5, andernfalls wird zu Schritt S4 zurückverzweigt. Auf diese Weise wird verhindert, daß die Parkposition verlassen wird wenn die Lichtintensität I(UL) nur kurzfristig den zweiten Grenzwert I2 unterschreitet, beispielsweise weil bei gleichbleibendem Sonnenstand eine Schilderbrücke oder der Ast eines Baumes vom Fahrzeug unterfahren werden, und dabei kurzfristig Schatten werfen. Diese Schritte werden beispielsweise in der Verzögerungseinheit 41 realisiert.

In einer weiteren alternativen Variante wird der Schritt S2 durch den Schritt S20 ersetzt. Im Schritt S20 wird die Lichtmenge I(UL) über einen Zeitraum dt integriert. Übertrifft die integrierte Lichtmenge den Grenzwert I3, so wird zu Schritt S21 bzw. S3 verzweigt, andernfalls zu Schritt S1. Auf diese Weise werden kurzfristige Schwankungen in der einfallenden Lichtmenge I (UL) weggemittelt und führen nicht zu kurzfristigen Sprüngen zwischen Betriebsposition 21a und Parkposition 21b. Diese Schritte werden beispielsweise in der Integrationseinheit 42 realisiert.

In einer weiteren alternativen Variante wird der Schritt S4 durch den Schritt S40 ersetzt. Im Schritt S40 wird die Lichtmenge I(UL) über einen Zeitraum dt integriert. Unterschreitet die integrierte Lichtmenge den Grenzwert I4, so wird zu Schritt S41 bzw. Schritt S5 verzweigt, andernfalls zurück zu Schritt S31 oder zu Schritt S40. Auf diese Weise werden kurzfristige Schwankungen in der einfallenden Lichtmenge I(UL) weggemittelt und führen nicht zu kurzfristigem Springen zwischen Betriebsposition 21a und Parkposition 21b. Diese Schritte werden beispielsweise in der Integrationseinheit 42 realisiert.

In anderen Worten besteht die Idee der vorliegenden Erfindung darin, den kritischen Winkel α des Sonnenstandes zu identifizieren. Falls diese Position der Sonne S über eine kritische Zeit hinweg eingehalten wird, wird das Head-Up-Display in eine Parkposition 21b gebracht und ausgeschaltet, sodaß keine Schädigung des Anzeigeelements 11 möglich ist. Der kritische Winkel der Sonne S ist erreicht, sobald die Sonnenstrahlen parallel zum Lichtpfad des virtuellen Bildes B verlaufen. Dann werden die Lichtstrahlen auf das Anzeigeelement 11 reflektiert und erhitzen dieses rasant. Die Detektion des kritischen Winkels α wird durch einen Lichttunnel 72 erzielt, der nur Licht in diesem speziellen Winkel α durchläßt. Wenn der lichtempfindliche Sensor 73 am Ende des Lichttunnels 72 über eine kritische Zeitspanne hinweg aktiviert wird, wird das Head-Up-Display in die Parkposition 21b gebracht, um das Anzeigeelement 11 zu schützen. Sobald die kritische Position wieder verlassen wird, wird das Head-Up Display wieder aktiviert. Die Zeit, die zu einer kritischen Temperatur auf dem Anzeigeelement 11 führt, ist geräteabhängig. Sie liegt im allgemeinen im Bereich weniger Minuten. Dies hängt unter anderem ab von der Größe der Spiegel 21,22, von deren Vergrößerungsfaktor und von weiteren passiven Gegenmaßnahmen. Dies sind beispielsweise das Anbringen von Polarisationsfiltern oder eine zusätzliche Beschichtung der Spiegel 21,22. Somit ist das Erreichen der Parkposition nicht zeitkritisch, sondern nur abhängig von einer rechtzeitigen Abregelung. Eine Verstellung eines der Spiegel 21,22 ist innerhalb weniger Sekunden realisierbar.

Bei diesem Vorgehen wird auf schon existierende Elemente eines typischen Head-Up-Displays zurückgegriffen. Durch geschickte Positionierung des Lichttunnels 72 in der Nähe des Lichtpfades sind keine zusätzlichen Bauteile oder Sicherungsmaßnahmen nötig. Ein Lichtsensor und eine Parkposition 21b werden für andere Funktionen des Head-Up-Displays bereits verwendet. Ein zusätzliches Teil ist der Lichttunnel 72, welcher konstruktiv in bestehenden Bauteilen integriert werden kann. Der bereits bisher verwendete Lichtsensor mißt die Umgebungshelligkeit, um die Helligkeit der Lichtquelle 5 automatisch anzupassen. Falls der bisher vorhandene Lichtsensor nicht verwendbar ist, wird ein zweiter, einfacher Sensor 73 benötigt.

Ein Vorteil der erfindungsgemäßen Maßnahmen besteht darin, daß sie nicht dauerhaft aktiv sind, sondern nur bei einem ganz speziellen Sonnenstand, bei dem das Umgebungslicht UL im kritischen Winkel α einfällt, und dies über eine gewisse Zeit erfolgt, was zur Schädigung des Anzeigeelements 11 führen kann.

Es liegt im Können des Fachmanns, eine oder mehrere der genannten Maßnahmen abzuändern oder in anderer Kombination einzusetzen, sofern diese unter den Gegenstand des Anspruchs 1 fallen, auch wenn diese nicht explizit hier beschrieben sind.

## Patentansprüche

1. Head-Up-Display mit einem Anzeigeelement (11), dessen Bild (B) mittels einer Ablenkeinheit (2) entlang einer optischen Achse (OA3) auf eine Spiegeleinheit eines Fahrzeugs geworfen wird, und von dort einem Umgebungsbild (UB) überlagert in Richtung Auge (61) eines Fahrers reflektiert wird, und einem lichtempfindlichen Sensor (73), wobei der Sensor (73) Umgebungslicht (UL') detektiert, welches parallel zur optischen Achse oder nur in einem kleinen davon abweichenden Winkelbereich von der Spiegeleinheit (3) kommend in die Ablenkeinheit (2) eintritt, und das Head-Up-Display eine Steuerungseinheit (4) aufweist, an deren Steuerungseingang (401) ein Signal (LS) des Sensors (73) anliegt, und deren Steuerungsausgang (402) mit einer Parkeinrichtung (20) für das Head-Up-Display verbunden ist, wobei das Head-Up-Display einen Lichttunnel (72) aufweist, der von der optischen Achse (OA3) beabstandet und parallel zu dieser ausgerichtet ist, und an dessen Ende (722) der Sensor (73) angeordnet ist, **dadurch gekennzeichnet, daß** der Lichttunnel (72) mehrere Trennwände (75) aufweist, die eine Vielzahl von kleinen Lichttunneln (720) mit im Vergleich zu ihrer Länge kleinem Querschnitt bilden.

2. Head-Up-Display nach Anspruch 1, **dadurch gekennzeichnet, daß** der Lichttunnel (72) aufweist:
- zumindest eine absorbierende Wandfläche (74) und/oder
- zumindest eine kegelförmig geneigte Wandflächen (74) und/oder
- zumindest eine zwischen den Wandflächen (74) angeordnete Trennwand (75), die im wesentlichen parallel zu zumindest einer Wandfläche (74) ausgerichtet ist.

3. Head-Up-Display nach Anspruch 1 oder 2, **dadurch gekennzeichnet, daß** der Lichttunnel (72) an einem Gehäuse (70) des Head-Up-Displays in der Nähe einer Ausgangsöffnung (7) der Ablenkeinheit (2) angeordnet ist.

4. Head-Up-Display nach einem der vorhergehenden Ansprüche, **dadurch gekennzeichnet, daß** die Steuerungseinheit (4) eine Verzögerungseinheit (41) und/oder eine Integrationseinheit (42) aufweist.

5. Head-Up-Display nach einem der vorhergehenden Ansprüche, **dadurch gekennzeichnet, daß** der Lichttunnel (72) eine Länge aufweist, die ein mehrfaches seines Durchmessers beträgt.

6. Head-Up-Display nach einem der vorhergehenden Ansprüche, **dadurch gekennzeichnet, daß** es eine kegelförmige Wandfläche (74) und geneigte Trennflächen aufweist, die alle auf denselben Fluchtpunkt ausgerichtet sind.

7. Head-Up-Display nach einem der vorhergehenden Ansprüche, **dadurch gekennzeichnet, daß** der Lichttunnel (72) ein in ein Gehäuse (70) des Head-Up-Displays eingespritztes Bauteil ist.

8. Head-Up-Display nach einem der vorhergehenden Ansprüche, **dadurch gekennzeichnet, daß** der Lichttunnel (72) einen quadratischen Querschnitt aufweist.

9. Head-Up-Display nach einem der vorhergehenden Ansprüche, **dadurch gekennzeichnet, daß** der Lichttunnel (72) einen rechteckigen Querschnitt aufweist.

10. Head-Up-Display nach Anspruch 1, **dadurch gekennzeichnet, daß** der Lichttunnel (72) durch eine Ausnehmung in einer Außenwand (76) des Head-Up-Displays gebildet ist.

11. Head-Up-Display nach Anspruch 1, **dadurch gekennzeichnet, daß** der Lichttunnel (72) kegelförmig geneigte Wandflächen (74) aufweist, die einen Kegelstumpf mit quadratischem Querschnitt bilden.

## Claims

1. Head-up display with a display element (11) whose image (B) is projected along an optical axis (OA3) onto a mirror unit of a vehicle by means of a deflection unit (2), and is reflected from there in the direction of an eye (61) of a driver overlaid on a surroundings image (UB), and with a light-sensitive sensor (73), wherein the sensor (73) detects ambient light (UL') that enters the deflection unit (2) coming from the mirror unit (3) parallel to the optical axis or only at a small angular range that deviates therefrom, and the head-up display has a control unit (4) at the control input (401) of which a signal (LS) of the sensor (73) is present, and whose control output (402) is connected to a parking device (20) for the head-up display, wherein the head-up display has a light tunnel (72) that is disposed at a distance from the optical axis (OA3) and is aligned parallel to the latter, and at whose end (722) the sensor (73) is arranged, **characterized in that** the light tunnel (72) has a plurality of separating walls (75) which form a plurality of small light tunnels (720) with a cross section that is small in comparison with their length.

2. Head-up display according to Claim 1, **characterized in that** the light tunnel (72) has:
- at least one absorbing wall surface (74) and/or
- at least one conically shaped, inclined wall surface (74) and/or
- at least one separating wall (75) which is arranged between the wall surfaces (74) and is substantially aligned parallel to at least one wall surface (74).

3. Head-up display according to Claim 1 or 2, **characterized in that** the light tunnel (72) is arranged at a housing (70) of the head-up display in the vicinity of an outlet opening (7) of the deflection unit (2).

4. Head-up display according to any of the preceding claims, **characterized in that** the control unit (4) has a delay unit (41) and/or an integration unit (42).

5. Head-up display according to any of the preceding claims, **characterized in that** the light tunnel (72) has a length that is a multiple of its diameter.

6. Head-up display according to any of the preceding claims, **characterized in that** it has a conically shaped wall surface (74) and inclined separating surfaces that are all aligned to the same point of convergence.

7. Head-up display according to any of the preceding claims, **characterized in that** the light tunnel (72) is a component injection-moulded into a housing (70) of the head-up display.

8. Head-up display according to any of the preceding claims, **characterized in that** the light tunnel (72) has a square cross section.

9. Head-up display according to any of the preceding claims, **characterized in that** the light tunnel (72) has a rectangular cross section.

10. Head-up display according to Claim 1, **characterized in that** the light tunnel (72) is formed by a recess in an outer wall (76) of the head-up display.

11. Head-up display according to Claim 1, **characterized in that** the light tunnel (72) has conically shaped, inclined wall surfaces (74) that form a truncated cone with a square cross section.

## Revendications

1. Affichage tête haute, comprenant un élément d'affichage (11) dont l'image (B) est projetée au moyen d'une unité de déviation (2) le long d'un axe optique (OA3) sur une unité de miroir d'un véhicule, et est réfléchie à partir de là en superposition avec une image ambiante (UB) en direction de l'œil (61) d'un conducteur, et un capteur photosensible (73), dans lequel le capteur (73) détecte la lumière ambiante (UL') qui entre dans l'unité de déviation (2) en parallèle à l'axe optique ou seulement dans une petite plage angulaire qui s'en écarte, en provenance de l'unité de miroir (3), et l'affichage tête haute présente une unité de commande (4) à l'entrée de commande (401) de laquelle un signal (LS) du capteur (73) est appliqué, et dont la sortie de commande (402) est reliée à un dispositif de rangement (20) pour l'affichage tête haute, dans lequel l'affichage tête haute présente un tunnel lumineux (72) qui est espacé de l'axe optique (OA3) et est aligné en parallèle à celui-ci, et à l'extrémité (722) duquel est disposé le capteur (73),
**caractérisé en ce que** le tunnel lumineux (72) présente plusieurs cloisons (75) qui forment une pluralité de petits tunnels lumineux (720) avec une petite section transversale en comparaison avec leur longueur.

2. Affichage tête haute selon la revendication 1, **caractérisé en ce que** le tunnel lumineux (72) présente :
- au moins une surface de paroi absorbante (74), et/ou
- au moins une surface de paroi (74) inclinée de manière conique, et/ou
- au moins une cloison (75) disposée entre les surfaces de paroi (74) et qui est alignée substantiellement en parallèle à au moins l'une des surfaces de paroi (74).

3. Affichage tête haute selon la revendication 1 ou 2, **caractérisé en ce que** le tunnel lumineux (72) est disposé sur un boîtier (70) de l'affichage tête haute à proximité d'une ouverture de sortie (7) de l'unité de déviation (2).

4. Affichage tête haute selon l'une quelconque des revendications précédentes, **caractérisé en ce que** l'unité de commande (4) présente une unité de temporisation (41) et/ou une unité d'intégration (42).

5. Affichage tête haute selon l'une quelconque des revendications précédentes, **caractérisé en ce que** le tunnel lumineux (72) présente une longueur qui est un multiple de son diamètre.

6. Affichage tête haute selon l'une quelconque des revendications précédentes, **caractérisé en ce qu'**il présente une surface de paroi conique (74) et des cloisons inclinées qui sont toutes alignées sur le même point de fuite.

7. Affichage tête haute selon l'une quelconque des revendications précédentes, **caractérisé en ce que** le tunnel lumineux (72) est un composant moulé par injection dans un boîtier (70) de l'affichage tête haute.

8. Affichage tête haute selon l'une quelconque des revendications précédentes, **caractérisé en ce que** le tunnel lumineux (72) présente une section transversale carrée.

9. Affichage tête haute selon l'une quelconque des revendications précédentes, **caractérisé en ce que** le tunnel lumineux (72) présente une section transversale rectangulaire.

10. Affichage tête haute selon la revendication 1, **caractérisé en ce que** le tunnel lumineux (72) est formé par un évidement dans une paroi extérieure (76) de l'affichage tête haute.

11. Affichage tête haute selon la revendication 1, **caractérisé en ce que** le tunnel lumineux (72) présente des surfaces de paroi (74) inclinées de manière conique qui forment un cône tronqué à section transversale carrée.
